# EUROPÄISCHE PATENTSCHRIFT

(11) **EP 1 774 174 B1**
(45) Veröffentlichungstag und Bekanntmachung des Hinweises auf die Patenterteilung: **10.06.2015**
(21) Anmeldenummer: 05767950.8
(22) Anmeldetag: 14.07.2005
(51) Int. Cl.: F04B 1/04

(54) **KOLBENPUMPE MIT KOMPAKTER HALTEVORRICHTUNG FÜR EINE RÜCKSTELLFEDER**
PISTON PUMP PROVIDED WITH A SMALL-SIZED RETURN SPRING HOLDER
POMPE A PISTON COMPRENANT UN DISPOSITIF DE MAINTIEN COMPACT POUR UN RESSORT DE RAPPEL

(30) Priorität: 30.07.2004 DE 102004037147
(43) Veröffentlichungstag der Anmeldung: 18.04.2007
(73) Patentinhaber: ROBERT BOSCH GMBH, 70442 Stuttgart (DE)
(72) Erfinder: SCHEPP, Rene, 71336 Waiblingen (DE); SCHULLER, Wolfgang, 74389 Cleebronn (DE); REINER, Juergen, 88167 Gestratz (DE)
(86) Internationale Anmeldenummer: PCT/EP2005/053373
(87) Internationale Veröffentlichungsnummer: WO 2006/013142

(56) Entgegenhaltungen:
- WO-A-2004/028878
- DE-A1- 10 229 201
- DE-A1- 10 310 169
- US-A1- 2003 138 333

## Beschreibung

### Stand der Technik

Die vorliegende Erfindung betrifft eine Kolbenpumpe nach dem Oberbegriff des Anspruchs 1. Eine solche Kolbenpumpe ist aus der DE 10229201 bekannt. Diese Kolbenpumpe ist unter anderem mit einer Haltevorrichtung ausgestattet, in der ein Federelement gehalten ist, welches für eine Rückstellung eines Schließelements eines Einlassventils ausgelegt ist.

Diese Kolbenpumpe ist in Form einer Radialkolbenpumpe ausgebildet, bei der wenigstens ein Kolben mittels eines Exzenters hin- und herbewegbar ist. Derartige Kolbenpumpen werden häufig auch für elektronische Stabilitätssysteme (ESP) oder elektrohydraulische Bremsanlagen (EHB) venrvendet. Die bekannte Kolbenpumpe weist dabei zwischen einem Eingangs- und einem Ausgangsventil einen Arbeits- bzw. Druckraum auf, in welchem durch die Bewegung des Kolbens ein Druck aufgebaut wird. Dieser Druckraum muss an seinem kolbenseitigen Ende gegen einen Niederdruckbereich abgedichtet werden, was häufig mittels Kolbenringen oder im Zylinder angebrachten Abdichtungselementen verwirklicht ist. Weiterhin ist ein Einlassventil im Druckraum angeordnet. Ein derartiger Aufbau erfordert eine Vielzahl von Einzelteilen und eine relativ aufwändige Montage.

### Vorteile der Erfindung

Die Kolbenpumpe nach den Merkmalen des Patentanspruchs 1 weist dem gegenüber den Vorteil auf, dass sie eine deutlich reduzierte Bauteileanzahl aufweist. Weiterhin kann die erfindungsgemäße Kolbenpumpe besonders einfach montiert werden. Insbesondere umfasst die erfindungsgemäße Haltevorrichtung einen Aufnahmebereich zur Aufnahme und Abstützung eines Federelements für eine Rückstellung eines Ventilschließelements des Einlassventils und einen integral an der Haltevorrichtung gebildeten Dichtbereich, der den Druckraum an seinem kolbenseitigen Ende gegenüber dem Niederdruckbereich der Kolbenpumpe abdichtet. Somit umfasst die Haltevorrichtung die Funktion des Haltens des Rückstellelements für das Ventil und die Funktion der Abdichtung des Druckraums gegenüber einem Niederdruckbereich. Erfindungsgemäß kann somit insbesondere auch eine Montage der Kolbenpumpe deutlich vereinfacht werden.

Die Unteransprüche zeigen bevorzugte Weiterbildungen der Erfindung.

Vorzugsweise ist der Dichtbereich der Haltevorrichtungen im Wesentlichen ringförmig und ermöglicht eine Abdichtung in radialer und in axialer Richtung.

Weiter bevorzugt umfasst die Haltevorrichtung zum Halten des Federelements wenigstens eine Durchgangsöffnung um Fluid aus dem Druckraum zu einer Innenseite des Dichtbereichs zuzuführen. Dadurch wird ermöglicht, dass das im Druckraum befindliche unter Druck stehende Fluid auch an der Innenseite des Dichtbereichs anliegt und somit eine verbesserte Abdichtung insbesondere in radialer Richtung erreicht wird, da das unter Druck stehende Fluid den ...

Dichtbereich der Haltevorrichtung gegen eine Dichtfläche drückt.

Vorzugsweise umfasst die Haltevorrichtung eine mittige Aussparung zur zumindest teilweisen Aufnahme einer zum Druckraum gerichteten Stirnseite des Kolbens. Die Stirnseite des Kolbens ist vorzugsweise mit einem stufenförmigen Bereich gebildet, so dass die Haltevorrichtung über das stirnseitige Kolbenende übergestülpt ist und das Kolbenende umschließt. Diese Ausbildung hat besonders große Montagevorteile, da der Kolben mitsamt einem Einlassventil und der Haltevorrichtung vormontiert werden können und schließlich nur noch mit einer Kolbenrückstellfeder in einen Zylinder der Kolbenpumpe eingeführt werden muss.

Um die Teileanzahl der erfindungsgemäßen Kolbenpumpe weiter zu reduzieren, umfasst die Haltevorrichtung vorzugsweise zusätzlich eine Fixiervorrichtung zur Fixierung eines Rückstellelements für den Kolben. Die Fixiervorrichtung ist besonders bevorzugt eine umlaufende, rinnenförmige Vertiefung, welche ein Ende des Rückstellelements aufnimmt. Das Rückstellelement ist vorzugsweise eine zylindrische Schraubenfeder. Dadurch kann ermöglicht werden, dass eine letzte Windung der Schraubenfeder in der rinnenförmigen Vertiefung aufgenommen ist. Weiter bevorzugt ist die Fixiervorrichtung derart am Dichtbereich angeordnet, dass die Rückstellkraft des Rückstellelements den Dichtbereich zusätzlich noch gegen die Dichtflächen presst. Dadurch kann eine verbesserte Abdichtung erreicht werden.

Besonders bevorzugt ist die Haltevorrichtung zum Halten eines Federelements aus einem Kunststoffmaterial, insbesondere einem Thermoplast gebildet. Hierbei kommen beispielsweise die Werkstoffe PA66 oder PEEK zum Einsatz.

Die erfindungsgemäße Kolbenpumpe wird besonders bevorzugt in Bremsanlagen von Fahrzeugen, beispielsweise zur Steuerung und Regelung eines Drucks in einem Radbremszylinder verwendet. Besonders bevorzugt wird die erfindungsgemäße Kolbenpumpe dabei in Verbindung mit elektronischen Steuer- und Regelungssystemen der Bremsanlage, wie z.B. ESP, EHB, ASR, usw. verwendet. Hierdurch lassen sich einerseits große Kostenvorteile erreichen, andererseits ermöglicht die erfindungsgemäße kombinierte Halte- und Dichtvorrichtung eine verbesserte Abdichtung des Druckraums der Kolbenpumpe, so dass die Bremsanlagen mit höheren Drücken betrieben werden können, ohne dass dadurch Kostensteigerungen für den gewünschten höheren Betriebsdruck notwendig sind.

### Zeichnung

Die Erfindung wird nachfolgend anhand eines bevorzugten Ausführungsbeispiels in Verbindung mit der Zeichnung im Detail beschrieben. In der Zeichnung ist:
- Figur 1: eine schematische Schnittansicht einer Kolbenpumpe mit einer Haltevorrichtung gemäß einem ersten Ausführungsbeispiel der vorliegenden Erfindung.
- Figur 2: eine vergrößerte, geschnittene Teilansicht der in Figur 1 gezeigten Kolbenpumpe,
- Figur 3: eine schematische Ansicht von unten der erfindungsgemäßen Haltevorrichtung,
- Figur 4: eine Schnittansicht entlang der Linie IV-IV von Figur 3,
- Figur 5: eine Schnittansicht entlang der Linie V-V von Figur 3 und
- Figur 6: eine perspektivische Ansicht der erfindungsgemäßen Haltevorrichtung.

### Beschreibung des Ausführungsbeispiels

Nachfolgend wird unter Bezugnahme auf die Figuren eine Kolbenpumpe 1 gemäß einem bevorzugten Ausführungsbeispiel der Erfindung beschrieben.

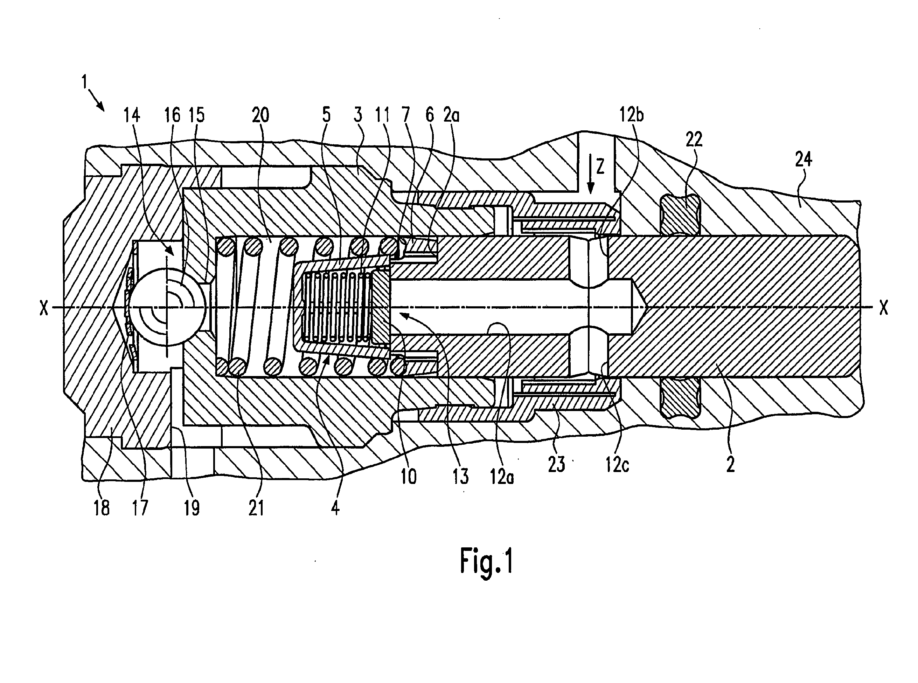

Figur 1 zeigt den Aufbau eines Pumpenelements der Kolbenpumpe 1. Ein Kolben 2 ist in Axialrichtung X-X hin- und her bewegbar in einem Zylinderelement 3 angeordnet. Der Kolben 2 wird beispielsweise mittels eines Exzenters bewegt. Im Inneren des Zylinderelements 3 ist ein Druckraum 20 vorgesehen, welcher zwischen einem Einlassventil 13 und einem Auslassventil 14 angeordnet ist. Wie aus Figur 1 ersichtlich ist, ist das Einlassventil 13 im Inneren des Druckraums 20 angeordnet und das Auslassventil 14 ist als Rückschlagventil ausgebildet, welches eine Durchgangsöffnung 15 freigibt bzw. verschließt. Das Auslassventil 14 umfasst eine Kugel 16 und eine Membranfeder 17, welche sich an einem Verschlusselement 18 abstützt. Das Verschlusselement verschließt eine im Gehäuse der Kolbenpumpe vorgesehene Stufenbohrung, in welcher das Pumpenelement angeordnet ist. Das Einlassventil 13 umfasst ein Schließelement 10 in Form einer scheibenförmigen Platte, eine Einlassventilfeder 11 und eine Haltevorrichtung 4.

Eine Zuführung von Hydraulikfluid zum Druckraum 20 erfolgt durch im Kolben 2 vorgesehene Bohrungen 12a, 12b und 12c. Das Hydraulikfluid wird in Richtung des Pfeils Z aus einer Zuleitung durch einen Filter 13 in die Querbohrungen 12b und 12c zugeführt und über die Längsbohrung 12a bei geöffnetem Einlassventil 13 in den Druckraum 20 zugeführt. Im Gehäuse 24 ist ferner noch eine exzenterseitige Abdichtung 22 angeordnet.

Im Druckraum 20 ist weiterhin eine zylindrische Schraubenfeder 21 angeordnet, welche eine Rückstellkraft zur Rückstellung des Kolbens 2 bereitstellt. Dem Auslassventil 14 hydraulisch nachgeschaltet ist eine Druckleitung 19, welche das unter Druck stehende Hydraulikfluid beispielsweise Radbremszylindern einer Bremsanlage eines Fahrzeugs zuführt.

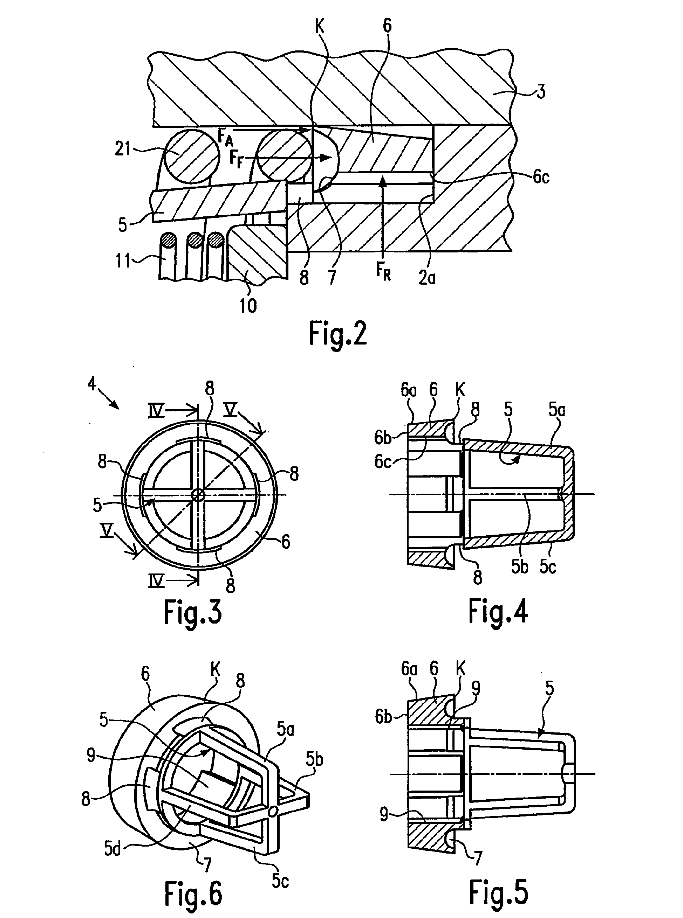

Die Haltevorrichtung 4 zum Halten der Einlassventilfeder 11 ist in den Figuren 3, 4, 5 und 6 im Detail hergestellt. Wie insbesondere aus den Figuren 4 und 5 ersichtlich ist, umfasst die Haltevorrichtung 4 einen Aufnahmebereich 5 und einen Dichtbereich 6. Der Aufnahmebereich 5 dient zur Aufnahme des Einlassventilfederelements 11 und weist einen im Wesentlichen topfförmigen, käfigartigen Aufbau auf. Genauer umfasst der Aufnahmebereich 5 vier balkenartige Elemente 5a, 5b, 5c und 5d welche den Aufnahmebereich 5 bilden. Wie aus Figur 1 ersichtlich ist, stützt sich die Einlassventilfeder 11 insbesondere an dem kreuzartig gebildeten Bodenbereich des Aufnahmebereichs 5 ab.

Der Dichtbereich 6 ist integral mit dem Aufnahmebereich 5 gebildet und weist eine Hauptdichtfläche 6a und eine Nebendichtfläche 6b auf. Die Hauptdichtfläche 6a stellt eine Abdichtung des Druckraums in axialer Richtung gegenüber dem Niederdruckbereich der Kolbenpumpe 1 bereit und die Nebendichtfläche 6b stellt eine Abdichtung an einer Stufe 2a am stirnseitigen Ende des Kolbens 2 in radialer Richtung bereit.

Die Hauptdichtfläche 6a ist dabei derart ausgebildet, dass sie zu einer Zylinderwand des Zylinderelements 3 schräg gestellt ist, so dass die Dichtkante K an dem zum Druckraum 20 gerichteten Ende des Dichtbereichs 6 gebildet ist.

Ferner ist an der Haltevorrichtung 4 noch eine umlaufende Fixierrinne 7 gebildet, welche zur Positionierung der Kolbenrückstellfeder 21 dient. Die Fixierrinne 7 weist im Wesentlichen eine im Schnitt halbkreisförmige Gestalt auf mit einem Radius, welcher ungefähr einem Radius des Federmaterials der Kolbenrückstellfeder 21 entspricht.
Wie insbesondere in den Figuren 3 und 6 gezeigt, sind weiter vier Durchgangsöffnungen 8 vorgesehen, um zu ermöglichen, dass Hydraulikfluid aus dem Druckraum 20 an einer Innenseite 6c des Dichtbereichs 6 anliegt. Zur Fixierung des stirnseitigen Bereichs des Kolbens 2 sind an der Innenseite des Dichtbereichs 6 der Haltevorrichtung 4 zusätzlich noch vorstehende Bereiche 9 vorgesehen(vgl. Figur 5). Hierbei kann beispielsweise eine Presspassung zwischen der Haltevorrichtung 4 und dem stufenförmigen Bereich des Kolbens 2 realisiert werden. Dadurch wird es möglich, dass die Haltevorrichtung 4 mit dem Einlassventil 13 an der Stirnseite des Kolbens 2 vormontiert werden kann und somit ein Zusammenbau der erfindungsgemäßen Kolbenpumpe deutlich vereinfacht ist.

Nachfolgend wird die Funktionsweise der erfindungsgemäßen Kolbenpumpe 1 beschrieben. Nachdem der Kolben 2 am oberen Totpunkt seine Bewegungsrichtung geändert hat, beginnt die Ansaugphase. In der Ansaugphase wird Hydraulikfluid über die Bohrungen 12a, 12b und 12c durch das geöffnete Einlassventil 13 in den Druckraum 20 angesaugt. Nachdem der Kolben 2 den unteren Totpunkt erreicht hat und sich die Bewegungsrichtung des Kolbens wieder umkehrt, wird das Einlassventil 13 geschlossen. Da der Druck in der Druckleitung 19 zu diesem Zeitpunkt noch größer als im Druckraum 20 ist, bleibt das Auslassventil 14 ebenfalls geschlossen. Durch die Bewegung des Kolbens 2 in Richtung seines oberen Totpunktes wird Druck im Druckraum 20 aufgebaut. Sobald der Druck im Druckraum 20 größer als der Druck in der Druckleitung 19 wird, öffnet das Auslassventil und unter Druck stehendes Hydraulikfluid strömt durch die Durchgangsbohrung 15 aus dem Druckraum 20 in die Druckleitung 19.

Während des Betriebes der Kolbenpumpe muss dabei eine Abdichtung zwischen dem Druckraum 20 und dem Niederdruckbereich (in Figur 1 im Bereich des Filters 23) sichergestellt werden. Dies wird durch den integralen Dichtbereich 6 der Haltevorrichtung 4 realisiert. Wie insbesondere aus den Figuren 2, 4 und 5 ersichtlich ist, ist die umlaufende Dichtkante K ständig in Kontakt mit der zylindrischen Innenfläche des Zylinderelements 3. Da eine Druckdifferenz zwischen dem Druckraum 20 und dem Niederdruckbereich während des Druckaufbaus im Druckraum 20 ständig größer wird, muss das Dichtelement bei einer ständig wachsenden Druckdifferenz dicht halten.

Da jedoch das im Druckraum 20 befindliche Hydraulikfluid durch die Öffnungen 8 auch am inneren Umfang des Dichtbereichs 6 anliegt, steigt mit steigendem Druck im Druckraum 20 auch eine durch das Hydraulikfluid ausgeübte Radialkraft F_{R}, was in Figur 2 dargestellt ist. Der Pfeil F_{A} zeigt dabei eine Axialkraft, welche durch den Hydraulikdruck im Druckraum 20 auf den Dichtbereich 6 wirkt. Da eine Rückstellkraft F_{F} der Kolbenrückstellfeder 21 mit ständiger Annäherung des Kolbens 20 an seinen oberen Totpunkt ebenfalls ständig ansteigt, kann die Abdichtung an der Hauptdichtfläche 6a an der Dichtkante K durch die Radialkraft F_{R} verbessert werden. Wie insbesondere aus Figur 2 weiter ersichtlich ist, wird zusätzlich noch eine kleinere Komponente einer Radialkraft durch das in der Fixierrinne 7 im Bereich der Dichtkante K anliegende Hydraulikfluid erhalten. An der Nebendichtfläche 6b wird ebenfallls eine exzellente Abdichtung erreicht, da die aus dem Druckraum 20 wirkende Axialkraft F_{A} und die Rückstellkraft F_{F} der Kolbenrückstellfeder 21 in Axialrichtung auf den Dichtbereich 6 wirken (vgl. Figur 2).

Die erfindungsgemäße Haltevorrichtung 4 weist somit neben der Haltefunktion zum Halten der Einlassventilfeder 11 auch noch eine Abdichtungsfunktion des Druckraums 20 gegenüber dem Niederdruckbereich der Kolbenpumpe auf. Dadurch kann einerseits die Teileanzahl der Kolbenpumpe reduziert werden und gleichzeitig eine verbesserte Abdichtung des Druckraums 20 erreicht werden, da der Druck aus dem Druckraum 20 noch eine zusätzliche Radialkraft F_{R} auf den Dichtbereich 6 ausübt. Weiterhin ergeben sich durch die erfindungsgemäße Haltevorrichtung 4 Montagevorteile, da die Haltevorrichtung 4 mitsamt dem Einlassventil 13 an der Stirnseite des Kolbens 2, genauer an der Stufe 2a des Kolbens vormontiert werden kann. Hierzu sind an der Haltevorrichtung 4 vorstehende Bereiche 9 an der Innenseite des Dichtbereichs 6 vorgesehen, welche reibschlüssige Verbindungen zwischen der Haltevorrichtung 4 und dem Kolben 2 bereitstellen. Die Montage kann dabei einfach derart erfolgen, dass die Einlassventilfeder 11 und das Schließelement 10 in den käfigartigen Aufnahmebereich 5 der Haltevorrichtung 4 eingelegt werden und anschließend die Haltevorrichtung 4 einfach über das stirnseitige Ende des Kolbens 2 übergestülpt wird. Somit können erfindungsgemäß auch große Vorteile bei einer Reduzierung der Montagekosten erhalten werden und darüber hinaus auch die Gefahr von Montagefehlern weiter reduziert werden.

Es sei noch angemerkt, dass die Nebendichtfläche 6b nicht wie in dem Ausführungsbeispiel dargestellt als scheibenförmige, gerade Abdichtfläche ausgebildet sein muss, sondern dass die Nebendichtfläche 6b auch abgerundet sein kann, so dass zwischen der Stufe 2a und der Nebendichtfläche 6b eine im Wesentlichen linienförmige Abdichtung erhalten wird. Dadurch kann der Dichtbereich 6 auch einen gewissen Mittenversatz ermöglichen, welcher durch eine geringe Schrägstellung des Kolbens im Betrieb entstehen könnte, ohne dass es zu Undichtigkeitsproblemen kommen würde.

## Patentansprüche

1. Kolbenpumpe,
mit einem Kolben (2), der in einem Zylinderelement (3) in Axialrichtung hin und her bewegbar angeordnet ist,
mit einem zwischen einem Niederdruckbereich mit einer Zuleitung und einem Druckraum (20) der Kolbenpumpe (1) angeordneten Einlassventil (13) und einem Auslassventil (14), wobei der Druckraum (20) zwischen dem Einlassventil (13) und dem Auslassventil (14) angeordnet ist und wobei bei geöffnetem Einlassventil (13) aus der Zuleitung eine Zuführung von Hydraulikfluid zum Druckraum (20) erfolgt,
mit einer Haltevorrichtung (4) in der ein Federelement (11) gehalten ist, welches für eine Rückstellung eines Schließelements (10) des Einlassventils (13) ausgelegt ist, wobei die Haltevorrichtung (4) einen Aufnahmebereich (5) zur Aufnahme und Abstützung des Federelements (11) umfasst, **dadurch gekennzeichnet,**
**dass** die Haltevorrichtung (4) einen integral an der Haltevorrichtung (4) gebildeten Dichtbereich (6) umfasst, der den Druckraum (20) an seinem kolbenseitigen Ende gegenüber dem Niederdruckbereich der Kolbenpumpe (1) abdichtet.

2. Kolbenpumpe nach Anspruch 1, **dadurch gekennzeichnet, dass** der Dichtbereich (6) im Wesentlichen ringförmig ausgebildet ist und eine Abdichtung in radialer Richtung und axialer Richtung ermöglicht.

3. Kolbenpumpe nach einem der vorhergehenden Ansprüche, **dadurch gekennzeichnet, dass** die Haltevorrichtung (4) wenigstens eine Durchgangsöffnung (8) umfasst, um Fluid aus dem Druckraum (20) zur Innenseite des Dichtbereichs (6) zuzuführen.

4. Kolbenpumpe nach einem der vorhergehenden Ansprüche, **dadurch gekennzeichnet, dass** ein druckraumseitiges Ende des Kolbens (2) einen abgestuften Bereich (2a) aufweist, wobei die Haltevorrichtung (4) am abgestuften Bereich (2a) befestigt ist.

5. Kolbenpumpe nach einem der vorhergehenden Ansprüche, **dadurch gekennzeichnet, dass** die Haltevorrichtung (4) eine Fixiervorrichtung (7) zur Fixierung eines Rückstellelements (21) für den Kolben (2) aufweist.

6. Kolbenpumpe nach Anspruch 5, **dadurch gekennzeichnet, dass** die Fixiervorrichtung (7) eine umlaufende, rinnenförmige Vertiefung ist.

7. Kolbenpumpe nach Anspruch 5 oder 6, **dadurch gekennzeichnet, dass** die Fixiervorrichtung (7) am Dichtbereich (6) der Haltevorrichtung (4) derart angeordnet ist, dass eine Rückstellkraft (F_{F}) des Rückstellelements (21) auf den Dichtbereich (6) in Axialrichtung (X-X) wirkt.

8. Kolbenpumpe nach einem der vorhergehenden Ansprüche, **dadurch gekennzeichnet, dass** die Haltevorrichtung (4) aus einem Kunststoffmaterial, insbesondere einem Thermoplast, hergestellt ist.

9. Kolbenpumpe nach Anspruch 8, **dadurch gekennzeichnet, dass** die Haltevorrichtung (4) aus PEEK oder PA66 hergestellt ist.

10. Bremsanlage oder Stabilitätssystem für ein Fahrzeug, umfassend eine Kolbenpumpe (1) nach einem der vorhergehenden Ansprüche.

## Claims

1. Piston pump,
having a piston (2) which is arranged so as to move to and fro in the axial direction in a cylinder element (3),
having an inlet valve (13) and an outlet valve (14) arranged between a low-pressure region with a feed line and a pressure space (20) of the piston pump (1), wherein the pressure space (20) is arranged between the inlet valve (13) and the outlet valve (14), and wherein when the inlet valve (13) is opened hydraulic fluid is fed from the feed line to the pressure space (20),
having a holding device (4) in which a spring element (11) which is configured to reset a closing element (10) of the inlet valve (13) is held,
wherein the holding device (4) comprises a receptacle region (5) for receiving and supporting the spring element (11), **characterized**
**in that** the holding device (4) comprises a sealing region (6) which is formed integrally on the holding device (4) and seals off the pressure space (20) at its piston-side end with respect to the low-pressure region of the piston pump (1).

2. Piston pump according to Claim 1, **characterized in that** the sealing region (6) is embodied in an essentially annular shape and permits sealing in the radial and axial directions.

3. Piston pump according to one of the preceding claims, **characterized in that** the holding device (4) comprises at least one through-opening (8) in order to feed fluid from the pressure space (20) to the inside of the sealing region (6).

4. Piston pump according to one of the preceding claims, **characterized in that** a pressure-space-side end of the piston (2) has a stepped region (2a), wherein the holding device (4) is attached to the stepped region (2a).

5. Piston pump according to one of the preceding claims, **characterized in that** the holding device (4) has a securing device (7) for securing a resetting element (21) for the piston (2).

6. Piston pump according to Claim 5, **characterized in that** the securing device (7) is a circumferential, groove-shaped depression.

7. Piston pump according to Claim 5 or 6, **characterized in that** the securing device (7) is arranged on the sealing region (6) of the holding device (4) in such a way that a restoring force (F_{F}) of the resetting element (21) acts on the sealing region (6) in the axial direction (X-X).

8. Piston pump according to one of the preceding claims, **characterized in that** the holding device (4) is manufactured from a plastic material, in particular a thermoplast.

9. Piston pump according to Claim 8, **characterized in that** the holding device (4) is manufactured from PEEK or PA66.

10. Brake system or stability system for a vehicle comprising a piston pump (1) according to one of the preceding claims.

## Revendications

1. Pompe à piston,
comprenant un piston (2), qui est disposé de manière à pouvoir se déplacer suivant un mouvement alternatif dans la direction axiale dans un élément de cylindre (3),
comprenant une soupape d'entrée (13) disposée entre une région basse pression avec une conduite d'amenée et un espace de pression (20) de la pompe à piston (1), et une soupape de sortie (14), l'espace de pression (20) étant disposé entre la soupape d'entrée (13) et la soupape de sortie (14) et, lorsque la soupape d'entrée est ouverte (13), du fluide hydraulique étant acheminé depuis la conduite d'amenée à l'espace de pression (20),
comprenant un dispositif de maintien (4) dans lequel est maintenu un élément de ressort (11) qui est prévu pour une position de rappel d'un élément de fermeture (10) de la soupape d'entrée (13),
le dispositif de maintien (4) comprenant une région de réception (5) pour recevoir et supporter l'élément de ressort (11), **caractérisée en ce que**
le dispositif de maintien (4) comprend une région d'étanchéité (6) formée intégralement au niveau du dispositif de maintien (4), qui étanchéifie l'espace de pression (20) au niveau de son extrémité côté piston par rapport à la région basse pression de la pompe à piston (1).

2. Pompe à piston selon la revendication 1, **caractérisée en ce que** la région d'étanchéité (6) est réalisée essentiellement sous forme annulaire et permet de réaliser une étanchéité dans la direction radiale et dans la direction axiale.

3. Pompe à piston selon l'une quelconque des revendications précédentes, **caractérisée en ce que** le dispositif de maintien (4) comprend au moins une ouverture de passage (8) afin d'acheminer du fluide depuis l'espace de pression (20) jusqu'au côté interne de la région d'étanchéité (6).

4. Pompe à piston selon l'une quelconque des revendications précédentes, **caractérisée en ce qu'**une extrémité du côté de l'espace de pression du piston (2) présente une région étagée (2a), le dispositif de maintien (4) étant fixé au niveau de la région étagée (2a).

5. Pompe à piston selon l'une quelconque des revendications précédentes, **caractérisée en ce que** le dispositif de maintien (4) présente un dispositif de fixation (7) pour la fixation d'un élément de rappel (21) pour le piston (2).

6. Pompe à piston selon la revendication 5, **caractérisée en ce que** le dispositif de fixation (7) est un renfoncement périphérique en forme de rainure.

7. Pompe à piston selon la revendication 5 ou 6, **caractérisée en ce que** le dispositif de fixation (7) est disposé au niveau de la région d'étanchéité (6) du dispositif de maintien (4) de telle sorte qu'une force de rappel (F_{F}) de l'élément de rappel (21) agisse sur la région d'étanchéité (6) dans la direction axiale (X-X).

8. Pompe à piston selon l'une quelconque des revendications précédentes, **caractérisée en ce que** le dispositif de maintien (4) est fabriqué à partir de matériau en plastique, en particulier à partir d'un matériau thermoplastique.

9. Pompe à piston selon la revendication 8, **caractérisée en ce que** le dispositif de maintien (4) est fabriqué en PEEK ou en PA66.

10. Installation de freinage ou système de stabilisation pour un véhicule, comprenant une pompe à piston (1) selon l'une quelconque des revendications précédentes.
